# EUROPÄISCHE PATENTSCHRIFT

(11) **EP 3 491 415 B1**
(45) Veröffentlichungstag und Bekanntmachung des Hinweises auf die Patenterteilung: **18.10.2023**
(21) Anmeldenummer: 17768374.5
(22) Anmeldetag: 29.08.2017
(51) Int. Cl.: G01S 13/93, H01P 3/16, G01S 7/03, G01S 13/42, G01S 13/87, H01P 1/10

(54) **KRAFTFAHRZEUG MIT EINER ERFASSUNGSEINRICHTUNG ZUR WINKELAUFGELÖSTEN ERFASSUNG DES KRAFTFAHRZEUGUMFELDS**
MOTOR VEHICLE COMPRISING A DETECTION DEVICE FOR DETECTING THE AREA SURROUNDING THE MOTOR VEHICLE IN AN ANGLE-RESOLVED MANNER
VÉHICULE À MOTEUR MUNI D'UN DISPOSITIF DE DÉTECTION POUR LA DÉTECTION À RÉSOLUTION ANGULAIRE DE L'ENVIRONNEMENT DU VÉHICULE À MOTEUR

(30) Priorität: 08.09.2016 DE 102016217134
(43) Veröffentlichungstag der Anmeldung: 05.06.2019
(73) Patentinhaber: AUDI AG, 85045 Ingolstadt (DE)
(72) Erfinder: SCHWENKERT, Michael, 85051 Ingolstadt (DE)
(86) Internationale Anmeldenummer: PCT/EP2017/071660
(87) Internationale Veröffentlichungsnummer: WO 2018/046353

(56) Entgegenhaltungen:
- US-A1- 2008 129 408
- US-A1- 2016 226 121
- US-A1- 2016 240 907
- LIN JAU-JR: "Integration of multiple automotive radar modules based on fiber-wireless network", 2015 24TH WIRELESS AND OPTICAL COMMUNICATION CONFERENCE (WOCC), IEEE, 23. Oktober 2015 (2015-10-23), Seiten 36-39, XP032824404, ISSN: 2379-1268, DOI: 10.1109/WOCC.2015.7346112 ISBN: 978-1-4799-8868-6 [gefunden am 2015-12-02]
- LAURIN P ET AL: "Hollow core terahertz optical fibers with hyperuniform disordered dielectric reflectors", 2014 39TH INTERNATIONAL CONFERENCE ON INFRARED, MILLIMETER, AND TERAHERTZ WAVES (IRMMW-THZ), IEEE, 14 September 2014 (2014-09-14), pages 1-2, XP032683649, DOI: 10.1109/IRMMW-THZ.2014.6956268 [retrieved on 2014-11-13]
- Shaghik Atakaramians ET AL: "Terahertz dielectric waveguides", Advances in Optics and Photonics, vol. 5, no. 2, 27 June 2013 (2013-06-27), page 169, XP055536290, DOI: 10.1364/AOP.5.000169

## Beschreibung

Die Erfindung betrifft ein Kraftfahrzeug mit einer Erfassungseinrichtung zur winkelaufgelösten Erfassung des Kraftfahrzeugumfelds durch ein Radarverfahren, wobei die Erfassungseinrichtung wenigstens eine Antenneneinrichtung, die zum Senden von Sendesignalen und/oder zum Empfangen von Empfangssignalen eingerichtet ist, und eine Zentraleinrichtung umfasst.

Eine Erfassung von Umfelddaten über Sensoren eines Kraftfahrzeugs gewinnt, insbesondere im Kontext von automatisierten und assistierten Fahrfunktionen, zunehmend an Bedeutung. Für viele Erfassungsaufgaben sind Radarsensoren besonders geeignet, da sie es ermöglichen, unabhängig von einer Ausleuchtung des Umfelds und weitgehend unabhängig von Witterungsbedingungen hochaufgelöste Umfelddaten zu sammeln, wobei bei einer winkelaufgelösten Erfassung eine dreidimensionale Bestimmung der Position von erfassten Objekten möglich ist.

Es können, wie beispielsweise in der Druckschrift DE 10 2015 007 303 A1 offenbart, mehrere Radarsensoren genutzt werden, die in verschiedenen Bereichen des Kraftfahrzeugs angeordnet sind, um Informationen über verschiedene Bereiche des Kraftfahrzeugumfelds zu gewinnen. Die Datenverarbeitung dieser verschiedenen Radarsensoren kann hierbei zentral erfolgen.

Es ist bekannt, dass bei Radarsensoren die erreichbare Winkelauflösung mit der genutzten Sensorfläche korreliert. Um eine hohe Winkelauflösung zu erreichen, können, wie in der Druckschrift DE 102 21 989 A1 offenbart ist, mehrere Patch-Antennen genutzt werden, die an verschiedenen Positionen im Kraftfahrzeug angeordnet sind. Werden diese Patch-Antennen derart zentral angesteuert, dass für ein gemeinsames Ansteuersignal jeweils eine Amplitude und Phase für jede der Patch-Antennen vorgegeben wird, kann hierüber ein Antennenschwenkwinkel vorgegeben werden bzw. die Form eines Antennendiagramms kann angepasst werden.

Hierbei ist es jedoch nachteilig, dass für jede der Patch-Antennen eine separate, hochfrequenztaugliche Anschlussleitung erforderlich ist, was zu einem sehr hohen Verdrahtungsaufwand im Kraftfahrzeug führt. Zudem ist ein hoher Aufwand zur Abschirmung dieser Leitungen erforderlich, da eine Vielzahl von Hochfrequenzsignalen auf einem engen Raum geführt werden sollen. Soll durch einen Radarsensor eine hohe Abstandsauflösung erreicht werden, ist es zudem vorteilhaft, hohe Frequenzen und Bandbreiten, beispielsweise eine Trägerfrequenz von 77 GHz und eine Bandbreite von 4 GHz, zu nutzen. Bei derart hohen Frequenzen können bei einer Nutzung von flexiblen Koaxialkabeln bzw. twisted pair Kabeln starke Dämpfungen und/oder Reflexionen auftreten. Um dies zu verhindern oder zu kompensieren, ist eine weitere Erhöhung des Verdrahtungsaufwandes notwendig.

Ausgehend hiervon liegt der Erfindung die Aufgabe zugrunde, ein Kraftfahrzeug mit einer Erfassungseinrichtung anzugeben, die bei einer Nutzung von Radarverfahren hohe Winkelauflösungen ermöglicht und dennoch mit relativ geringem Aufwand aufbaubar ist. Die Dokumente US 2016/240907 A1, US 2016/226121 A1, US 2008/129408 A1, "Integration of multiple automotive radar modules based on fiber-wireless network", 2015 24TH WIRELESS AND OPTICAL COMMUNICATION CONFERENCE (WOCC), IEEE, 23. Oktober 2015, Seiten 36-39, ISSN: 2379-1268, DOI: 10.1109/WOCC.2015.7346112, ISBN: 978-1-4799-8868-6 von Lin Jau-jr, "Hollow core terahertz optical fibers with hyperuniform disordered dielectric reflectors", 2014 39TH INTERNATIONAL CONFERENCE ON INFRARED, MILLIMETER, AND TERAHERTZ WAVES (IRMMW-THZ), IEEE, 14. September 2014 (2014-09-14), Seiten 1-2, XP032683649, DOI: 10.1109/IRMMW-THZ.2014.6956268 von Laurin P ET AL und "Terahertz dielectric waveguides", Advances in Optics and Photonics, Bd. 5, Nr. 2, 27. Juni 2013 (2013-06-27), Seite 169, XP055536290, DOI: 10.1364/AOP.5.000169 von Shaghik Atakaramians ET AL sind auch für die hier beschriebenen Techniken relevant.

Die Aufgabe wird erfindungsgemäß durch ein Kraftfahrzeug nach Anspruch 1 gelöst.

Erfindungsgemäß wird somit vorgeschlagen, sendeseitig eine Signalübertragung zwischen der Zentraleinrichtung und der Antenneneinrichtung bzw. vorzugsweise mehreren Antenneneinrichtungen im Terahertzbereich durchzuführen. Als Terahertzstrahlung wird jene elektromagnetische Strahlung bezeichnet, die eine Wellenlänge zwischen 0,1 mm und 1,0 mm aufweist, das heißt deren Frequenz ca. im Bereich zwischen 300 GHz und 3 THz liegt. Es handelt sich somit um elektromagnetische Strahlung in einem Frequenzbereich, der zwischen der Mikrowellenstrahlung und der Infrarotstrahlung liegt. Dieser Strahlungsbereich liegt somit zwischen dem Frequenzbereich, bis zu dem klassische Hochfrequenztechnik genutzt wird, und dem Frequenzbereich, in dem üblicherweise mit Methoden der Optik gearbeitet wird. Durch Fortschritte in der Mikrostrukturierung von Leitern bzw. Halbleitern ist dieser Frequenzbereich jedoch mittlerweile elektronisch zugänglich.

Entsprechend hochfrequenztaugliche Komponenten, beispielsweise Kondensatoren und Induktivitäten und somit auch Schwingkreise, Filter und Ähnliches, lassen sich beispielsweise mithilfe von mikrostrukturierten Streifenleitern realisieren. Da hierbei jedoch Leitungen bereitgestellt werden sollen, die einen Bruchteil der Länge der Wellenlänge aufweisen, ist eine hochgenaue Lithographie erforderlich. Hierfür sind jedoch mittlerweile eine Vielzahl von Ansätzen, beispielsweise eine optische Nahfeldlithographie, eine Röntgen- oder Elektronenstrahllithographie oder die Nutzung von fokussierten Ionenstrahlen, bekannt. Einige dieser Ansätze sind auch in der Massenproduktion nutzbar oder werden zum Teil bereits genutzt. Ein weiterer Ansatz zur Bereitstellung von Terahertzstrahlung ist es, zunächst elektromagnetische Wellen bei einer niedrigeren Frequenz, beispielsweise in einem Bereich zwischen 100 und 250 GHz, zu generieren, und anschließend die Frequenz zu vervielfachen, beispielsweise durch eine nichtlineare Verstärkung oder Dämpfung.

Ein großer Vorteil der Nutzung von Terahertzstrahlung zur Signalübertragung ist es, dass dielektrische Wellenleiter genutzt werden können, also insbesondere Kunststofffasern. Signalübertragungen über dielektrische Wellenleiter können mit einer sehr geringen Dämpfung erfolgen. Zudem können dielektrische Wellenleiter mit sehr geringem Aufwand gegeneinander abgeschirmt werden. Es ist somit insgesamt eine kompaktere und flexiblere Leitungsführung möglich als bei einer Nutzung von elektrischen Hochfrequenzleitungen. Da zudem definierte Signallaufzeiten zwischen der Zentraleinrichtung und der oder den Antenneneinrichtungen realisiert werden, können mehrere Antennen einer Antenneneinrichtung bzw. Antennen mehrerer Antenneneinrichtungen mit definierter Phasenlage zueinander angesteuert werden bzw. es können Signale mit definierter Phasenlage zueinander empfangen werden. Anders ausgedrückt ist ein kohärentes Senden und/oder Empfangen von Radarsignalen über mehrere Antenneneinrichtungen möglich. Durch Bereitstellung entsprechender Steuersignale bzw. eine entsprechende Verarbeitung der Empfangssignale kann somit die effektive Antennenapertur des Radarsensors vergrößert werden, womit die Winkelauflösung in Horizontal- und/oder Vertikalrichtung vergrößert werden kann. Beispielsweise kann eine Ortsauflösung von 10 bis 30 cm in einem Abstand von 100 m erreicht werden.

Ergänzend oder alternativ können die Antennen der verschiedenen Antenneneinrichtungen auch im Rahmen eines sende- und/oder empfangsseitigen Beam-Formings genutzt werden, um eine Antennendiagrammform gezielt an eine bestimmte Nutzungssituation anzupassen und es sind sogenannte multiple input multiple output Strategien (MIMO) möglich, durch die beispielsweise mehrere Reflexionspfade berücksichtigt werden können, um Uneindeutigkeiten zu beheben oder Ähnliches.

Zur Signalübertragung wird eine Terahertzstrahlung mit einer Frequenz genutzt, die wenigstens 15 mal so hoch ist wie die Frequenz der zu erzeugenden bzw. der zu empfangenden Radarstrahlung. Wird beispielsweise Radarstrahlung mit einer mittleren Frequenz von 77 GHz genutzt, kann zur Übertragung Terahertzstrahlung mit einer Frequenz von 1,155 THz oder mehr genutzt werden. Eine Nutzung von derart hohen Übertragungsfrequenzen ermöglicht insbesondere eine gute Kohärenz zwischen den Sende- bzw. Empfangssignalen verschiedener Antenneneinrichtungen.

Durch die Zentraleinrichtung können die Steuersignale und/oder durch die Antenneneinrichtung können die Empfangssignale oder die aus diesen abgeleiteten Signale als Analogsignale über den Wellenleiter übertragbar sein. Beispielsweise kann ein bereitgestelltes Terahertzsignal durch diese Signale frequenz-, phasen- und/oder amplitudenmoduliert werden oder entsprechende Signale können zu dem Terahertzsignal oder einem tiefer frequenten Signal addiert werden, wonach das übertragene Signal durch eine nichtlineare Verstärkung oder Dämpfung generiert wird. Eine Analogübertragung ermöglicht es, sie einfach aufgebaute Antenneneinrichtungen zu nutzen.

Alternativ ist auch eine digitale Übertragung der Steuersignale und/oder der Empfangssignale bzw. der abgeleiteten Signale möglich. Hierbei können übliche digitale Modulationsverfahren, beispielsweise eine Amplitudenmodulation, insbesondere eine Quadraturamplitudenmodulation, genutzt werden. Durch Nutzung einer digitalen Kommunikation kann insbesondere ein Verdrahtungsaufwand eingeschränkt werden, da statt einer sternförmigen Verdrahtung zwischen einer Zentraleinrichtung und mehreren Antenneneinrichtungen beispielsweise auch Linien- oder Ringtopologien genutzt werden können. Im Rahmen einer digitalen Übertragung ist es zudem besonders einfach, die Phasenlage zwischen verschiedenen Antenneneinrichtungen bzw. zwischen verschiedenen Antennen der Antenneneinrichtungen festzulegen. Dies ist beispielsweise möglich, indem der Beginn der Wandlung eines Signals zum Senden um eine vorgegebene Taktzahl verzögert wird.

Bei einer Nutzung einer digitalen Kommunikation ist es vorteilhaft, wenn die Datenübertragung mit einer fest vorgegebenen Taktung erfolgt, so dass stets eine Zeitsynchronisation der einzelnen Antenneneinrichtungen sichergestellt ist. Zusätzlich können in vorgegebenen Abständen Synchronisationssignale gesendet werden, um eine Verschiebung um ganze Taktzyklen, die beispielsweise bei Kommunikationsfehlern auftreten kann, zu kompensieren und die Antenneneinrichtungen neu zu der Zentraleinrichtung zu synchronisieren.

Die Einkopplungsvorrichtung kann eine Antenne aufweisen. Über diese Antenne kann die Terahertzstrahlung abgestrahlt und in einen über sein oder ein weiteres Dielektrikum mit der Antenne gekoppelten Wellenleiter eingekoppelt werden. Antennen, die dazu geeignet sind, Strahlung im Terahertzbereich abzustrahlen, werden auch als Photonenantennen bezeichnet. Bei der Antenne kann es sich um eine Dipol-Antenne handeln. Bei Dipol-Antennen wird eine maximale Abstrahl- bzw. Empfangseffizienz erreicht, wenn die Länge der Antenne der halben Wellenlänge entspricht. Es sind jedoch auch Antennen möglich, deren Länge einem ganzzahligen Vielfachen der halben Wellenlänge entspricht. Die Antennenlänge kann geringfügig von den genannten Größen abweichen, um eine Antennenimpedanz anzupassen. Da die Wellenlängen bei Terahertzstrahlung sehr kurz sind, können auch sehr kurze Antennen, beispielsweise mit einer Länge von 0,05 mm bis 0,5 mm, genutzt werden. Da übliche Lithographieverfahren hier an ihre Auflösungsgrenzen stoßen, können Verfahren zur Mikrolithographie, wie beispielsweise optische Nahfeldlithographie, Röntgenlithographie, Elektronenstrahllithographie oder direkte Mikrostrukturierungsverfahren, beispielsweise durch einen fokussierten Ionenstrahl, genutzt werden.

Als Wellenleiter kann eine Kunststofffaser verwendet werden. Hierbei kann es sich insbesondere um eine Polytetrafluorethylen-Faser handeln, die auch als PTFE-Faser oder Teflon^{®}-Faser bezeichnet wird. Derartige Fasern sind gut zur Übertragung von Terahertzstrahlung geeignet und flexibel verlegbar.

Durch die Einkopplungsvorrichtung der Zentraleinrichtung ist die Strahlungsenergie zum Senden der Sendesignale in den dielektrischen Wellenleiter einkoppelbar. In diesem Fall weist die Antenneneinrichtung zumindest zum Senden der Sendesignale ausschließlich passive Bauteile auf. Es ist somit ein besonders einfacher Aufbau der Antenneneinrichtung möglich. Die Strahlungsenergie wird somit durch die zentraleinrichtungsseitige Einkopplungsvorrichtung, insbesondere über eine Antenne, in Form von Terahertzstrahlung in den Wellenleiter eingekoppelt. Antenneneinrichtungsseitig erfolgt eine Auskopplung dieser Strahlungsenergie, beispielsweise ebenfalls über eine Antenne, eine Frequenzumsetzung und eine anschießende Abstrahlung. Eine Frequenzumsetzung erfolgt hierbei von einer Terahertzstrahlung zwischen 300 GHz und 3 THz auf eine Radarstrahlung, die beispielsweise eine Mittelfrequenz von 77 GHz aufweisen kann.

Die antenneneinrichtungsseitige Frequenzumsetzung durch passive Bauteile kann, insbesondere, wenn eine zentraleinrichtungsseitige Frequenzumsetzung zur Bereitstellung der Terahertzstrahlung durch Amplitudenmodulation erfolgt oder, zumindest nach einer Bandpassfilterung, in einer Amplitudenmodulation resultiert, dadurch erfolgen, dass die empfangene Terahertzstrahlung gleichgerichtet wird, beispielsweise durch eine Schottky-Diode, und anschließend insbesondere gefiltert wird, bevor sie der Sendeantenne zum Senden des Sendesignals zugeführt wird. Durch die Filterung können Hochfrequenz- und/oder Gleichstrom- bzw. Gleichspannungsanteile aus dem Signal entfernt werden. Dies ist je nach konkreter Struktur der Antenneneinrichtung und insbesondere der Sendeantenne zum Senden der Sendesignale nicht notwendig erforderlich.

Soll eine Bereitstellung der Strahlungsenergie zum Senden der Sendesignale durch die Zentraleinrichtung erfolgen und werden mehrere Antennen einer oder mehrerer Antenneneinrichtungen zum Senden von Sendesignalen genutzt, ist es vorteilhaft, diese Antennen sternförmig mit der Zentraleinrichtung zu verbinden. Es ist jedoch auch möglich, Strahlungsenergie zum Senden der Sendesignale für verschiedene genutzte Antennen gemeinsam über einen dielektrischen Wellenleiter bereitzustellen. Beispielsweise können den einzelnen Antennen verschiedene Frequenzen für die als Trägersignal genutzte Terahertzstrahlung zugeordnet werden und die Signale für die einzelnen Antennen können vor der Frequenzumsetzung, beispielsweise durch eine entsprechende Bandpassfilterung, getrennt werden.

Die Antenneneinrichtung des Kraftfahrzeugs umfasst eine Frequenzumsetzerschaltung, durch die das Steuersignal oder ein in Abhängigkeit des Steuersignals generiertes Signal zur Bereitstellung des Sendesignals und/oder das Empfangssignal im Rahmen der Bereitstellung des aus diesem abgeleiteten Signals frequenzumsetzbar sind. Eine besonders einfache Art der Frequenzumsetzung für das Steuersignal zur Bereitstellung des Sendesignals wurde bereits obig erläutert. Es ist jedoch auch möglich, andere Modulations- und Demodulationsverfahren zur Frequenzumsetzung zu verwenden. Beispielsweise kann eine bereitgestellte Terahertzstrahlung durch das Steuersignal bzw. ein zu sendendes Sendesignal, das Empfangssignal oder das daraus abgeleitete Signal frequenz-, phasen- oder amplitudenmoduliert werden. Entsprechende Modulations- und Demodulationsverfahren sind im Stand der Technik prinzipiell bekannt. Teilweise ist es bei einer Verarbeitung sehr hochfrequenter Signale, wie sie im erfindungsgemäßen Kraftfahrzeug genutzt werden, jedoch vorteilhaft, diese Ansätze geringfügig zu modifizieren. Beispielsweise kann für eine Amplitudenmodudlation das Modulationssignal zu einem Zwischensignal addiert werden, wonach das Summensignal einer nicht-linearen Verstärkung oder Dämpfung zugeführt wird. Hieraus resultiert ein Signal, das Oberschwingungen des Zwischensignals aufweist, die jedoch durch das Modulationssignal amplitudenmoduliert sind. Eine Frequenzvervielfachung zur Bereitstellung von Terahertzstrahlung und eine Modulation dieser Terahertzstrahlung können somit gemeinsam erfolgen.

Die Erfassungseinrichtung umfasst vorzugsweise mehrere voneinander beabstandet angeordnete Antenneneinrichtungen. Diese können vertikal und/oder horizontal voneinander beabstandet sein. Hierdurch ist es möglich, eine effektive Antennenfläche der Erfassungseinrichtung zum Senden und/oder zum Empfangen von Radarstrahlung zu vergrößern, wodurch eine Winkelauflösung verbessert werden kann.

Es kann jeweils wenigstens eine der Antenneneinrichtungen in oder an einem Stoßfänger und/oder einem Scheinwerfer und/oder einer A-Säule und/oder einem Kühlergrill und/oder einer Windschutzscheibe und/oder einer Fronthaubenabschlussleiste und/oder einer Zierleiste des Kraftfahrzeugs angeordnet sein. Die Antenneneinrichtungen können sehr kleinbauend sein und somit problemlos in vorhandene Kraftfahrzeugkomponente integriert werden. Die Antenneneinrichtungen können hierbei als separates Modul mit den genannten Komponenten verbunden sein oder in die Komponenten selbst integriert sein, beispielsweise indem zumindest Teile der Schaltung der Antenneneinrichtung gemeinsam mit der jeweiligen Komponente als spritzgegossener Schaltungsträger ausgebildet sind.

Es ist zudem vorteilhaft, wenn die Zentraleinrichtung wenigstens eine Sendeantenne zum Senden von Sendesignalen und/oder wenigstens eine Empfangsantenne zum Empfangen von Empfangssignalen aufweist. Zudem können die Antenneneinrichtungen jeweils mehrere Sendeantennen zum Senden von Sendesignalen und/oder mehrere Empfangsantennen zum Empfangen von Empfangssignalen aufweisen. Durch diese beiden Ansätze können zusätzliche Sende- und/oder Empfangsantennen bereitgestellt werden, womit die Winkelauflösungen und/oder die Flexibilität der Nutzung der Erfassungseinrichtung weiter erhöht werden kann.

Weitere Vorteile und Einzelheiten der Erfindung ergeben sich aus den folgenden Ausführungsbeispielen sowie den zugehhörigen Zeichnungen. Hierbei zeigen schematisch:
- Fig. 1: ein Ausführungsbeispiel eines erfindungsgemäßen Kraftfahrzeugs,
- Fig. 2: eine Detailansicht des in Fig. 1 gezeigten Kraftfahrzeugs, die eine Verbindung zwischen einer Zentraleinrichtung und mehreren Antenneneinrichtungen über mehrere Wellenleiter zeigt, und
- Fig. 3: die einzelnen an der Signalübertragung über die Wellenleiter in Fig. 2 beteiligten Funktionsblöcke.

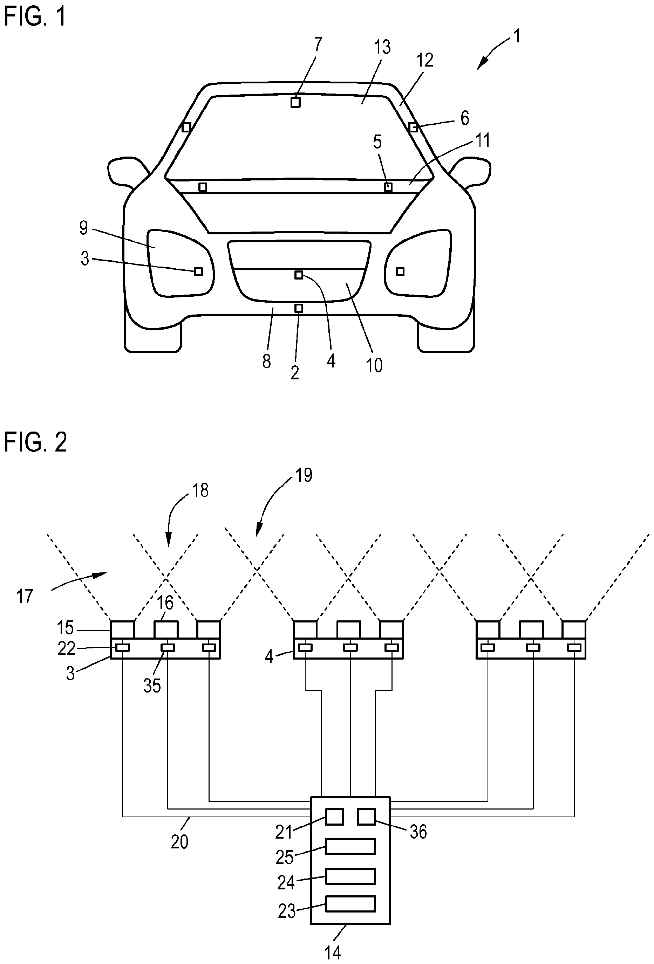

Fig. 1 zeigt eine Frontalansicht eines Kraftfahrzeugs 1 mit einer Erfassungseinrichtung zur winkelaufgelösten Erfassung des Kraftfahrzeugumfelds durch ein Radarverfahren. Die Erfassungseinrichtung weist mehrere Antenneneinrichtungen 2 - 7 auf, die an der Front des Kraftfahrzeugs horizontal und vertikal voneinander beabstandet angeordnet sind. Fig. 2 zeigt schematisch das Zusammenwirken der Antenneneinrichtungen 2 - 7 mit einer Zentraleinrichtung zum Senden von Sendesignalen und zum Empfangen von Empfangssignalen. Aus Übersichtlichkeitsgründen sind in Fig. 2 nur die Antenneneinrichtungen 3, 4 gezeigt, die im Wesentlichen in einer horizontalen Ebene liegen.

Die in Fig. 2 dargestellte Verbindung der Antenneneinrichtungen 2 - 7 mit der gemeinsamen Zentraleinrichtung dient im Kraftfahrzeug 1 dazu, ein kohärentes Senden und Empfangen von Radarstrahlung über die verschiedenen Antenneneirichtungen 2 - 7 hinweg zu ermöglichen. Anders ausgedrückt kann Radarstrahlung mit einer vorgegebenen Phasenlage von den verschiedenen Antenneneinrichtungen 2 - 7 ausgesandt und mit einer definierten Phasenlage empfangen werden. Hierdurch wird ermöglicht, dass die in Fig. 2 gezeigten Sende- und Empfangsantennen 15, 16 der Antenneneinrichtung 2 - 7 zusammenwirken können, um gemeinsam eine große Antennenapparatur aufzuspannen und somit eine mögliche Winkelauflösung der Umfelderfassung sowohl in horizontaler als auch in vertikaler Richtung zu erhöhen. Hierzu sind die verschiedenen Antenneneinrichtungen 2 - 7 voneinander horizontal und vertikal beabstandet angeordnet, wobei die Antenneneinrichtungen 2 in einem Stoßfänger 8, die Antenneneinrichtungen 3 in Scheinwerfern 9, die Antenneneinrichtung 4 in einem Kühlergrill 10, die Antenneneinrichtungen 5 in einer Fronthaubenabschlussleiste 11, die Antenneneinrichtungen 6 in den A-Säulen 12 und die Antenneneinrichtung 7 an der Windschutzscheibe 13 des Kraftfahrzeugs 1 angeordnet sind.

Das Zusammenwirken der einzelnen Antenneneinrichtungen 2 - 7 wird nun mit Bezug auf Fig. 2 für die in einer Ebene liegenden Antenneneinrichtungen 3, 4 beschrieben, wobei zunächst ausschließlich auf das Senden von Sendesignalen eingegangen werden soll. Jede der Antenneneinrichtungen 2 - 7 weist mehrere Sendeantennen 15 auf, die jeweils Radarstrahlung in einen fest vorgegebenen Abstrahlbereich 17 im Kraftfahrzeugvorfeld abstrahlen können. Aufgrund des Öffnungswinkels des Abstrahlbereichs 17 entstehen Überlagerungsbereiche 18, in denen sich die Radarstrahlung der Sendeantennen 15 einer jeweiligen Antenneneinrichtung 2 - 7 überlagert, und zudem Überlagerungsbereiche 19, in denen sich die Radarstrahlung von Sendeantennen 15 verschiedener der Antenneneinrichtungen 2 - 7 überlagert. Dies ist in Fig. 2 ausschließlich für eine Horizontalebene dargestellt, gilt jedoch aufgrund der horizontalen und vertikalen Beabstandung der Antenneneinrichtungen 2 - 7 in alle Richtungen im gesamten Vorfeld des Kraftfahrzeugs 1.

Die Sendeantennen 15 können im Kraftfahrzeug 1 durch die Zentraleinrichtung 14 derart angesteuert werden, dass die durch die einzelnen Sendeantennen 15 abgestrahlte Radarstrahlung jeweils eine vorgegebene Phasenlage aufweist. In Abhängigkeit der Amplituden und Phasen der durch die verschiedenen Sendeantennen 15 abgestrahlten Radarstrahlungen entstehen in den Überlagerungsbereichen 18, 19 somit abschnittsweise konstruktive und destruktive Überlagerungen der Radarstrahlung verschiedene Sendeantennen 15. Durch eine Vorgabe entsprechender Amplituden bzw. Phasen für die einzelnen Sendeantennen 15 durch die Steuereinrichtung 14 kann somit eine definierte Antennendiagrammform vorgegeben werden bzw. die abgestrahlte Radarstrahlung kann horizontal und vertikal verschwenkt werden. Dies ermöglicht eine gezielte Abtastung des Fahrzeugvorfeldes und wird auch als Beamforming bezeichnet. Durch die mehreren Antenneneinrichtungen 2 - 7 wird eine Apertur einer Radarantenne, die durch diese Antenneneinrichtung 2 - 7 gebildet wird, vergrößert, wodurch gegenüber der Nutzung einer einzelnen Antenneneinrichtung eine bessere Winkelauflösung, das heißt insbesondere eine stärkere Bündelung der abgestrahlten Radarstrahlung erreicht werden kann. Dies gilt, wie später detailliert erläutert werden wird, auch empfangsseitig.

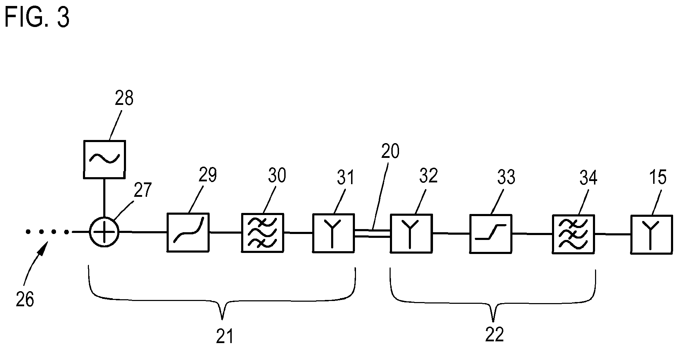

Wie in Fig. 2 dargestellt ist, wird jeder der Sendeantennen 15 über einen separaten Wellenleiter 20 ein Steuersignal zur Steuerung des Sendens der Sendesignale zugeführt. Die Wellenleiter 20 sind dielektrische Wellenleiter, das heißt sie sind elektrisch isolierend, und übertragen die entsprechenden Steuersignale durch eine Terahertzstrahlung mit einer Wellenlänge zwischen 0,1 mm und 1,0 mm. Dies ermöglicht hohe Übertragungsbandbreiten und eine sehr gute Phasentreue der Übertragung auch bei hohen Frequenzen der ausgestrahlten Radarstrahlung von beispielsweise 77 GHz. Die Steuereinrichtung 14 weist eine später detailliert erläuterte Einkopplungsvorrichtung 21 auf, über die diese Terahertzstrahlung, insbesondere über eine Antenne der Einkopplungsvorrichtung, in den Wellenleiter 20 eingekoppelt werden kann. Antenneneinrichtungsseitig ist eine Auskopplungsvorrichtung 22 vorgesehen, die erfindungsgemäß ausschließlich passive Bauteile umfasst und dazu dient, eine Frequenzumsetzung der empfangenen Terahertzstrahlung durchzuführen und die frequenzumgesetzte Strahlungsleistung der Sendeantenne 15 zuzuführen. Dieser Übertragungsweg wird später detailliert mit Bezug auf Fig. 3 erläutert.

Durch die Zentraleinrichtung 14 werden die Steuersignale derart generiert, dass zunächst durch eine Verarbeitungseinrichtung 23 die relativen Phasen und Amplituden für die einzelnen Sendeantennen 15 vorgegeben werden. Zudem gibt die Verarbeitungseinrichtung 23 Parameter für eine Frequenz- und/oder Amplitudenmodulation der abgestrahlten Radarstrahlung vor. Anders ausgedrückt gibt die Verarbeitungseinrichtung 23 für jede der Sendeantennen 15 vor, wieviel Radarstrahlung mit welcher Frequenz wann abgestrahlt werden soll.

In Abhängigkeit der Vorgaben durch die Verarbeitungseinrichtung 23 wird durch eine Hochfrequenzsteuereinheit 24 ein jeweiliges Hochfrequenzsignal für die einzelnen Sendeantennen 15 generiert und über einen Hochfrequenzverstärker 25 verstärkt. Dieses Hochfrequenzsignal soll als Steuersignal der Sendeantenne 15 zugeführt werden. Hierzu wird es zu einer Terahertzstrahlung frequenzumgesetzt, die eine Wellenlänge zwischen 0,1 mm und 1 mm aufweist, und in den dielektrischen Wellenleiter 20 eingekoppelt. In der Antenneneinrichtung 2 - 7 wird die Terahertzstrahlung über eine Auskopplungseinrichtung 22 ausgekoppelt, wieder zu der ursprünglichen Radarfrequenz umgesetzt und anschließend über die Sendeantenne 15 abgestrahlt.

Eine Möglichkeit zur Durchführung dieser Operationen ist in der Fig. 3 dargestellt. Wie durch die gepunktete Linie 26 dargestellt ist, wird das Hochfrequenzsignal einem Addierer 27 zugeführt. Durch diesen wird zu dem Hochfrequenzsignal ein Zwischensignal hinzuaddiert, das durch eine Oszillatorschaltung 28 generiert wird. Die Oszillatorschaltung 28 kann bereits Signale mit einer Frequenz zwischen 300 GHz und 3 THz, also Terahertzsignale, generieren, es ist jedoch auch möglich, dass sie in einem Mikrowellenfrequenzbereich, also beispielsweise bei 150 der 200 GHz, arbeitet. Das Summensignal wird anschließend einer nicht linearen Verstärkerstufe 29 zugeführt. Hierdurch werden höhere harmonische Schwingungen des Summensignals bereitgestellt, deren jeweilige Amplitude von dem zugeführten Hochfrequenzsignal, also dem Steuersignal, abhängt. Durch einen Bandpassfilter 30 wird eine dieser Oberschwingungen ausgewählt und über eine Antenne 31 in den dielektrischen Wellenleiter 20 eingekoppelt.

Das erläuterte Vorgehen entspricht im Wesentlichen einer Amplitudenmodulation eines Signals mit einer Frequenz, die ein ganzzahliges Vielfaches der Frequenz des Zwischensignals ist, durch das Steuersignal. Gegenüber einer typischen Amplitudenmodulation, bei der die Signale multipliziert werden, weist das beschriebene Vorgehen zwei Vorteile auf. Zum einen wären für eine Multiplikation von Signalen im hohen Gigahertzbereich oder Terahertzbereich sehr schnelle aktive Bauteile erforderlich. Diese sind häufig aufwändig herzustellen und damit teuer. Zum anderen wird durch das beschriebene Vorgehen zugleich mit der Amplitudenmodulation eine Frequenzumsetzung zu höheren Frequenzen hin erreicht. Es kann damit eine Oszillatorschaltung 28 genutzt werden, die verglichen mit der Terahertzstrahlung niedrigere Frequenzen bereitstellt und somit einfacher zu implementieren sein kann.

Die Komponenten der Einkopplungsvorrichtung 21, insbesondere die Oszillatorschaltung 28 und die Antenne 31, können sehr kleine Strukturen im Nanometer oder Mikrometerbereich aufweisen, um ausreichen hohe Resonanzfrequenzen aufzuweisen. Entsprechend kleine Strukturen können durch moderne Lithographiemethoden, beispielsweise durch die Nutzung von Nahfeldoptiken, Röntgenlithographie oder Elektronenstrahllithographie oder auch durch eine direkte Materialbearbeitung durch einen fokussierten Ionenstrahl bereitgestellt werden.

Antenneneinrichtungsseitig wird die Terahertzstrahlung durch die Auskoppelschaltung 22 aus dem Wellenleiter 20 ausgekoppelt, frequenzumgesetzt und an die Sendeantenne 15 bereitgestellt. Da das gesamte Radarfrontend bereits in der Zentraleinrichtung 14 implementiert ist, ist es möglich, dass die Auskoppelschaltung 22 ausschließlich passive Komponenten umfasst. Die Auskopplung der Terahertzstrahlung erfolgt durch eine weitere Antenne 32, deren Aufbau im Wesentlichen der Antenne 31 entsprechen kann. Durch einen Gleichrichter 33 wird das Signal gleichgerichtet. Ein Gleichrichten kann beispielsweise durch eine Schottky-Diode erfolgen. Das gleichgerichtete Signal wird durch einen Tiefpassfilter 34 geglättet und anschließend der Sendeantenne 15 zugeführt. Statt einem Tiefpassfilter 34 kann auch ein Bandpassfilter genutzt werden, um zusätzlich Gleichstrom- bzw. Gleichspannungsanteile aus dem Signal zu entfernen.

Eine entsprechende Signalübertragung kann auch empfangsseitig erfolgen. Dieser Aspekt ist nicht Teil der beanspruchten Erfindung.

Von den Empfangsantennen 16 ist für die Antenneneinrichtungen 3, 4 jeweils nur eine dargestellt. Das Empfangssignal dieser Empfangsantenne wird einer antenneneinrichtungsseitigen Einkopplungsvorrichtung 35 zugeführt, um frequenzumgesetzt und in den dielektrischen Wellenleiter 20 eingekoppelt zu werden. Anschließend erfolgt zentraleinrichtungsseitig eine Auskopplung durch die Auskopplungseinrichtung 36. Die Empfangssignale der einzelnen Empfangsantennen 16 können anschließend gemeinsam verarbeitet werden, um beispielsweise eine Röntgenantenne mit größerer Apparatur bereitzustellen bzw. um ein empfangsseitiges Beamformung durchzuführen.

In dem erläuterten Ausführungsbeispiel wird die Sendeleistung für die Sendeantenne 15 bereits durch die Zentraleinrichtung 14 bereitgestellt und über die dielektrischen Wellenleiter 20 übertragen. Dies ermöglicht einen sehr einfachen Aufbau der einzelnen Antenneneinrichtungen 3, da keine Verstärkung der Hochfrequenzsignale erforderlich ist. Andererseits können durch die notwendige Frequenzumsetzung im Rahmen der Ein- bzw. Auskopplung der Signale in den Wellenleiter 20 Leistungsverluste entstehen. Um diese zu reduzieren, können komplexer aufgebaute Antennenvorrichtungen 2 - 7 genutzt werden, die jeweils separate Hochfrequenzverstärker für die einzelnen Sendeantennen 15 aufweisen. In diesem Fall würde die Zentraleinrichtung 14 keinen Hochfrequenzverstärker 25 aufweisen, sondern dieser wäre antenneneinrichtungsseitig zwischen die Auskopplungsvorrichtung 22 und die Sendeantenne 15 geschaltet.

In einer weiteren alternativen Ausführungsform wäre es möglich, die Steuersignale bzw. die Empfangssignale oder die aus den Empfangssignalen abgeleiteten Signale digital zu übertragen. Hierzu kann antenneneinrichtungsseitig und zentraleinrichtungsseitig jeweils eine Analog-Digital- bzw. eine Digital-Analog-Wandlung vorgesehen sein. Es können anschließend im Stand der Technik prinzipiell bekannte Modulationsverfahren genutzt werden, um eine in die Wellenleiter 20 eingekoppelte Terahertzstrahlung zu modulieren. Der Vorteil einer digitalen Steuerung der einzelnen Antenneneinrichtungen bzw. einer digitalen Übertragung der Empfangsdaten ist, dass statt der in Fig. 2 gezeigten sternförmigen Verbindungsstruktur auch eine andere Topologie, beispielsweise eine Linien- oder Ring-Topologie, vorgesehen sein kann. Bei einer digitalen Übertragung kann zudem ein einmal generiertes und übertragenes Sendesignal für mehrere in der Sendeantenne 15 genutzt werden, wobei für die einzelnen Sendeantennen verschiedene Amplituden und Phasen festgelegt werden können.

## Patentansprüche

1. Kraftfahrzeug mit einer Erfassungseinrichtung zur winkelaufgelösten Erfassung des Kraftfahrzeugumfelds durch ein Radarverfahren, wobei die Erfassungseinrichtung wenigstens eine Antenneneinrichtung (2 - 7), die zum Senden von Sendesignalen eingerichtet ist, und eine Zentraleinrichtung (14) umfasst,
**dadurch gekennzeichnet,**
**dass** die Zentraleinrichtung (14) wenigstens eine Einkopplungsvorrichtung (21, 35) aufweist, durch die Terahertzstrahlung mit einer Wellenlänge zwischen 0,1 mm und 1,0 mm in einen zugeordneten dielektrischen Wellenleiter (20) des Kraftfahrzeugs (1) einkoppelbar ist, um zwischen der Zentraleinrichtung (14) und der Antenneneinrichtung (2 - 7) Steuersignale zur Steuerung des Sendens der Sendesignale zu übertragen, wobei die zur Signalübertragung genutzte Terahertzstrahlung eine Frequenz aufweist, die wenigstens 15 mal so hoch ist wie die Frequenz der zu erzeugenden Radarstrahlung, wobei die Antenneneinrichtung (2 - 7) eine Auskopplungsvorrichtung (22) aufweist, die ausschließlich passive Bauteile umfasst und als Frequenzumsetzerschaltung dient, durch die das Steuersignal oder ein in Abhängigkeit des Steuersignals generiertes Signal zur Bereitstellung des Sendesignals frequenzumsetzbar ist, wobei durch die Einkopplungsvorrichtung (21) der Zentraleinrichtung (14) die Strahlungsenergie zum Senden der Sendesignale in den dielektrischen Wellenleiter (20) einkoppelbar ist.

2. Kraftfahrzeug nach Anspruch 1,
**dadurch gekennzeichnet,**
**dass** die Einkopplungsvorrichtung (21, 35) eine Antenne (31) aufweist.

3. Kraftfahrzeug nach Anspruch 1 oder 2,
**dadurch gekennzeichnet,**
**dass** als Wellenleiter (20) eine Kunststofffaser verwendet wird.

4. Kraftfahrzeug nach einem der vorangehenden Ansprüche,
**dadurch gekennzeichnet,**
**dass** die Erfassungseinrichtung mehrere voneinander beabstandet angeordnete der Antenneneinrichtungen (2 - 7) umfasst.

5. Kraftfahrzeug nach Anspruch 4,
**dadurch gekennzeichnet,**
**dass** jeweils wenigstens eine der Antenneneinrichtungen (2 - 7) in oder an einem Stoßfänger (8) und/oder einem Scheinwerfer (9) und/oder einer A-Säule (12) und/oder einem Kühlergrill (10) und/oder einer Windschutzscheibe (13) und/oder einer Fronthaubenabschlussleiste (11) und/oder einer Zierleiste des Kraftfahrzeugs (1) angeordnet sind.

6. Kraftfahrzeug nach einem der vorangehenden Ansprüche,
**dadurch gekennzeichnet,**
**dass** die Zentraleinrichtung (14) wenigstens eine Sendeantenne umfasst

## Claims

1. Motor vehicle having a detection device for detecting the area surrounding the vehicle in an angle-resolved manner using a radar method wherein the detection device comprises at least one antenna apparatus (2 - 7) which is configured to transmit transmission signals, and a central apparatus (14),
**characterised in that**,
the central apparatus (14) has at least one coupling-in device (21, 35) by means of which terahertz radiation with a wavelength between 0.1 mm and 1.0 mm can be coupled into an assigned dielectric waveguide (20) of the motor vehicle (1), in order to transmit between the central apparatus (14) and the antenna apparatus (2 - 7) control signals for controlling the transmission of the transmission signals, wherein the terahertz radiation used for the signal transmission has a frequency which is at least 15 times as high as the frequency of the radar radiation to be generated, wherein the antenna apparatus (2 - 7) has a coupling-out device (22) which comprises exclusively passive components and serves as a frequency converter circuit by means of which the control signal or a signal generated as a function of the control signal is frequency-convertible for providing the transmission signal, wherein by means of the coupling-in device (21) of the central apparatus (14) the radiation energy for transmitting the transmission signals can be coupled into the dielectric waveguide (20).

2. Motor vehicle according to claim 1,
**characterised in that**,
the coupling-in device (21, 35) has an antenna (31).

3. Motor vehicle according to claim 1 or 2,
**characterised in that**,
a plastic fibre is used as a waveguide (20).

4. Motor vehicle according to any of the preceding claims,
**characterised in that**,
the detection device comprises several of the antenna apparatuses (2 - 7) arranged at intervals from one another.

5. Motor vehicle according to claim 4,
**characterised in that**,
respectively at least one of the antenna apparatuses (2 - 7) are arranged in or against a bumper (8) and/or a headlamp (9) and/or an A-column (12) and/or a radiator grille (10) and/or a windscreen (13) and/or a front hood closure strip (11) and/or a decorative strip of the motor vehicle (1).

6. Motor vehicle according to any of the preceding claims,
**characterised in that**,
the central apparatus (14) comprises at least one transmitting antenna.

## Revendications

1. Véhicule automobile avec un dispositif de détection pour la détection à résolution angulaire de l'environnement du véhicule automobile par un procédé de radar, dans lequel le dispositif de détection comporte au moins un dispositif d'antenne (2-7) qui est conçu pour l'envoi de signaux d'émission, et un dispositif central (14),
**caractérisé en ce que**
le dispositif central (14) présente au moins un dispositif de couplage (21, 35), peut être couplé par le faisceau térahertz avec une longueur d'ondes entre 0,1 mm et 1,0 mm dans un conducteur d'onde (20) diélectrique associé du véhicule automobile (1) afin de transmettre entre le dispositif central (14) et le dispositif d'antenne (2-7) des signaux de commande pour la commande de l'envoi des signaux d'émission, dans lequel le faisceau téraherzt utilisé pour la transmission de signaux présente une fréquence qui est au moins 15 fois plus grande que la fréquence du faisceau radar à générer, dans lequel le dispositif d'antenne (2-7) présente un dispositif de découplage (22) qui comporte des composants exclusivement passifs et sert de circuit de convertisseur de fréquence, par lequel le signal de commande ou un signal généré en fonction du signal de commande peut être converti en fréquence pour la fourniture du signal d'émission, dans lequel par le dispositif de couplage (21) du dispositif central (14), l'énergie de faisceau peut être couplée pour l'envoi des signaux d'émission dans le conducteur d'onde (20) diélectrique.

2. Véhicule automobile selon la revendication 1,
**caractérisé en ce que**
le dispositif de couplage (21, 35) présente une antenne (31).

3. Véhicule automobile selon la revendication 1 ou 2,
**caractérisé en ce que**
une fibre synthétique est utilisée comme conducteur d'onde (20).

4. Véhicule automobile selon l'une quelconque des revendications précédentes,
**caractérisé en ce que**
le dispositif de détection comporte plusieurs dispositifs d'antenne (2-7) agencés à distance les uns des autres.

5. Véhicule automobile selon la revendication 4,
**caractérisé en ce que**
respectivement au moins un des dispositifs d'antenne (2-7) est agencé dans ou sur un pare-chocs (8) et/ou un phare (9) et/ou une colonne A (12) et/ou une calandre (10) et/ou un pare-brise (13) et/ou une baguette de finition de capot avant (11) et/ou un enjoliveur du véhicule automobile (1).

6. Véhicule automobile selon l'une quelconque des revendications précédentes,
**caractérisé en ce que**
le dispositif central (14) comporte au moins une antenne d'émission.
